# EUROPEAN PATENT APPLICATION

(11) **EP 1 972 880 A1**
(43) Date of publication of application: **24.09.2008**
(21) Application number: 08003795.5
(22) Date of filing: 29.02.2008
(51) Int. Cl.: F28F 9/04, B60H 1/00, F24H 9/12, B23P 15/26

(54) **Method for forming connector portion for heat exchanger**

(30) Priority: 22.03.2007 JP 2007074678
(71) Applicant: Sanden Corporation, Isesaki-shi, Gunma 372-8502 (JP)
(72) Inventor: Yabata, Toshihiko, Isesaki-shi Gunma 372-8502 (JP); Chiba, Tomohiro, Isesaki-shi Gunma 372-8502 (JP); Imaizumi, Naoya, Isesaki-shi Gunma 372-8502 (JP)
(74) Representative: Feldmeier, Jürgen

(57) **Abstract**

A method for forming a connector portion for a heat exchanger by connecting a connector (4) communicating between an interior of a header (2) and an external circuit, to the header (2), so that a center axis (9) of an opening (8) of the header (2) and a center axis (7) of a flow path (6) formed in the connector (4) are crossed to each other at a certain angle, characterized in that the flow path (6) of the connector (4) is formed only by machining which performs cutting in one direction using a cutting tool, and a header side opening (10) of the flow path (6) of the connector (4) formed by the cutting is connected to the opening (8) of the header (2). In such a method, the number of processes for the machining and the cost required for machining the connector (4) can be reduced, and the productivity of the connector (4) can be improved.

## Description

The present invention relates to a method for forming a connector portion of a heat exchanger which forms inlet and outlet portions of heat exchange medium for the heat exchanger, and specifically, to a method for forming a connector portion suitable for use in a case of forming a connector portion for connecting a refrigerant circuit tube and a heat exchanger in an air conditioning system for vehicles, etc.

A connector portion of a heat exchanger is a portion for connecting an external circuit of heat exchange medium (for example, refrigerant) and the heat exchanger, and it is necessary to form a flow path for the heat exchange medium in the connector for allowing the heat exchange medium to be entered into and discharged from the heat exchanger relatively to the external circuit. For forming a conventional connecting portion between the connector and a header of the heat exchanger (a distributor of the heat exchanger), a method is frequently employed wherein a communication pipe for forming a flow path of heat exchange medium is press fitted into a surface portion of the header connection side of the connector, and when the connector and the header are connected to each other, the communication pipe is inserted into an opening provided on the connecting portion of the header to form a flow path communicating an interior of the connector and an interior of the header (for example, JP-A-2004-347210). In JP-A-2004-219027, although a structure is disclosed wherein an interior of a connector and an interior of a header are communicated with each other without using such a communication pipe, this publication relates to a connector portion with a special structure, and the structure of the connecting portion may become complicated.

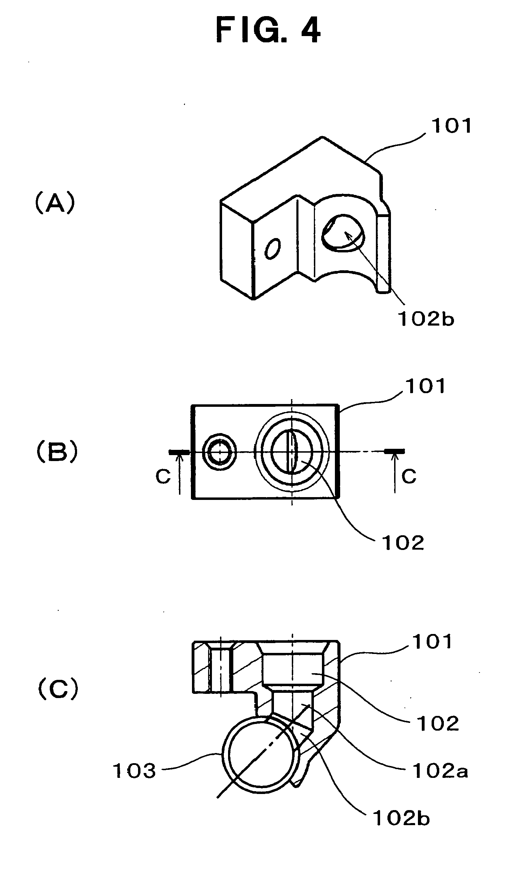

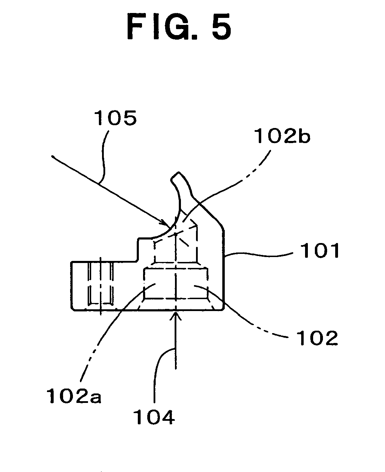

Further, in a connector portion of a heat exchanger, it is frequently required that a center axis of an opening of a header and a center axis of an inner flow path formed in a connector are crossed at a certain angle, for example, from the positional relationship with an external tube. In particular, because a heat exchanger used for an air conditioning system for vehicles is frequently mounted in a narrow space, such a connecting structure is frequently required. In a case where there is such a requirement, a connector is formed, for example, as shown in Fig. 4(A), (B) and (C) and Fig. 5. Namely, when a flow path 102 is machined in a connector 101, it is necessary that a flow path portion 102a with a complete circular cross section is machined by cutting from the external tube connection side of connector 101, and further, a flow path portion 102b with a complete circular cross section is machined by cutting from the side of header 103 to form the flow path 102 in connector 101. Therefore, because machining operations from two directions of from the external tube connection side and from the header 103 side are required, for the machining of connector 101, it is necessary to remove a once cut connector 101 from a cutting machine and to reset a chuck for the next cutting, and to cut the connector 101 from the reverse side again. As a result, cost and time are required for the machining, and the productivity is poor.

Further, in a case where the aforementioned structure for inserting the communication pipe is applied to the connector portion shown in Fig. 4(A), (B) and (C) and Fig. 5, for example, as shown in Fig. 6(A) and (B), a communication pipe 106 is press fitted to flow path portion 102b at header 103 side of connector 101 before connection (Fig. 6(A)) and the communication pipe 106 is inserted into the opening of the side of header 103 (Fig. 6(B)), but there is a fear that the inserted communication pipe 106 and the tip portion of a tube 107 inserted into header 103 interfere with each other (interference portion 108). Therefore, the connecting portion of connector 101 to header 103 must be designed to be able to avoid the interference between tube 107 and communication pipe 106, thereby decreasing the design freedom.

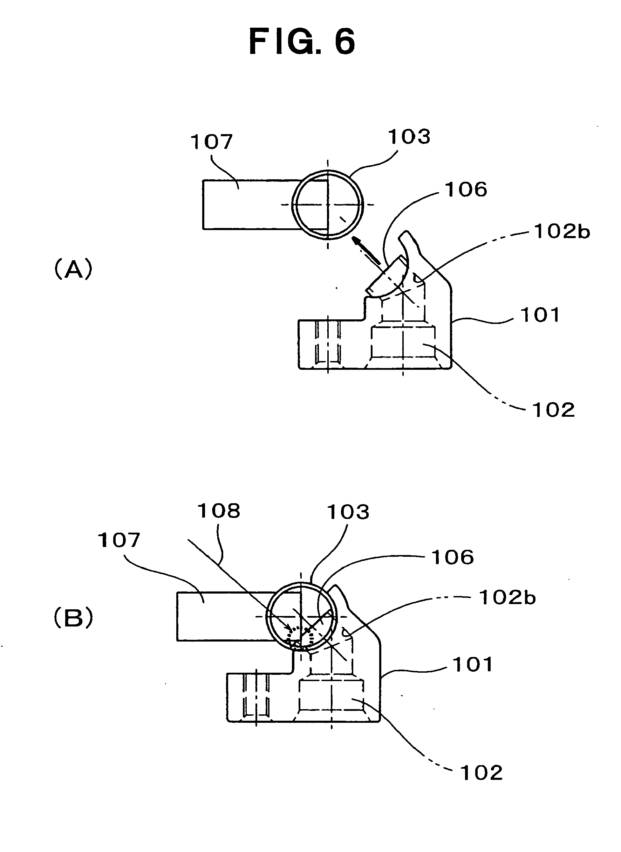

Further, in any of the structures shown in Figs. 5 and 6, because it is hard to enlarge the cross-sectional area of the flow path at the connecting portion of the connector and the header of the heat exchanger, there is a limit for reducing a pressure loss at this portion even if required.

Accordingly, it would be desirable to provide a method for forming a connector portion of a heat exchanger, which can reduce the cost required for machining a connector and improve the productivity of the connector by decreasing (simplifying) the machining process (cutting process of flow path) for the connector, in a case where the connector is required to be connected to a header so that the center axis of the opening of the header and the center axis of the inner flow path of the connector are crossed at a certain angle.

Further, it would be desirable to provide a method for forming a connector portion of a heat exchanger, which can reduce the cost of the connector portion and increase the design freedom of the connecting portion of the connector to the header of the heat exchanger by removing a communication pipe press fitted to the connector side.

Furthermore, it would be desirable to provide a method for forming a connector portion of a heat exchanger, which can enlarge the cross-sectional area of a flow path at the connecting portion between the connector and the header of the heat exchanger, thereby reducing a pressure loss at this portion.

The present invention provides a method for forming a connector portion for a heat exchanger by connecting a connector, which communicates between an interior of a header of the heat exchanger and an external circuit, to the header, so that a center axis of an opening of the header and a center axis of a flow path formed in the connector are crossed to each other at an angle, characterized in that the flow path of the connector is formed only by machining which performs cutting in one direction using a cutting tool, and an opening at a header side of the flow path of the connector formed by the cutting is connected to the opening of the header.

In this method, especially, the machining of the flow path of the connector using the cutting tool can be performed from one direction and by only one time of cutting, and whereby, the required machining can be performed very easily.

In such a method for forming a connector portion for a heat exchanger according to the present invention, only by the machining by cutting in one direction using the cutting tool, particularly, only by the machining by cutting in one direction from the external tube connection side of the connector, both of the flow path in the connector and the opening of the flow path at the header side are formed. Therefore, it is not necessary to perform the machining by cutting in two directions of from the external tube connection side and from the header side as in the aforementioned conventional machining, and the number of processes required for the machining, the time required for the machining, and the cost for the machining can be reduced, and the productivity can be improved.

This method for forming a connector portion for a heat exchanger according to the present invention can be achieved, for example, by a method wherein feeding of the cutting tool for cutting the flow path of the connector is stopped at a position in a feeding direction of the cutting tool, the position being within a range of a region in which a tip of the cutting tool forms the opening at the header side of the flow path of the connector, and a portion shaped along a shape of the tip is left in the connector being machined by cutting. Namely, only by the machining by cutting in one direction, the flow path portion extending in the direction along the center axis of the flow path of the connector and the header side opening portion opening at the header side tip portion of the flow path portion so that the center axis of the opening portion and the center axis of the flow path portion are crossed to each other at a certain angle, are both machined, and by utilizing the shape of the tip of the cutting tool, the shape of the flow path in the connector at this header side opening portion is formed at a predetermined shape.

In this method, it is preferred that a feeding amount of the cutting tool, and a size or a position, or both, of the opening of the header, are decided in connection with each other. In more detail, it is preferred that the header side opening of the connector determined depending upon the feeding amount of the cutting tool, and a size or a position, or both, of the opening of the header, are decided in connection with each other.

In this case, for example, by setting one of the opening of the header and the feeding amount of the cutting tool as a reference, the other may be decided. Namely, the feeding amount of the cutting tool may be decided depending upon the opening of the header so that a cross-sectional area of a flow path at a position communicating between the opening of the header and the opening at the header side of the flow path of the connector becomes maximum. Alternatively, the size of the opening of the header and a position of the opening of the header in a circumferential direction of the header may be decided depending upon the feeding amount of the cutting tool so that a cross-sectional area of a flow path at a position communicating between the opening of the header and the opening at the header side of the flow path of the connector becomes maximum.

Further, in the method for forming a connector portion for a heat exchanger according to the present invention, it is preferred that a position of the opening at the header side of the flow path of the connector and a position of the opening of the header are set so as to coincide with each other, and the connector is connected to the header at that condition, from the viewpoint of forming a smooth flow path.

Further, it is preferred that the opening at the header side of the flow path of the connector is formed as a schematically oval shape. In the opening having such a shape, as compared with the conventional complete circular shape, it becomes possible to make the cross-sectional area of the opening portion larger, and at the same time, it becomes possible to enlarge the cross-sectional area of the flow path for reducing the pressure loss.

Moreover, in the method for forming a connector portion for a heat exchanger according to the present invention, it is possible that the flow path of the connector is communicated with the interior of the header without interposing another member. Namely, this is a method for connecting the header side opening of the flow path of the connector directly to the opening of the header without providing a communication pipe in the aforementioned conventional structure. By omitting such a communication pipe, the number of parts can be decreased, the assembling can be simplified, the design freedom can be increased, and improvement of the productivity and reduction in cost of the connector portion can be expected.

The above-described connector is usually brazed to the header after being connected to the header. By the connection by brazing, a desirable flow path with no leakage can be completed at this portion. This brazing may be carried out in a furnace at a time together with other portions (for example, a heat exchanger core portion).

Such a method for forming a connector portion for a heat exchanger according to the present invention can be applied to any heat exchanger having a connector portion, and it is suitable, for example, for a case where the heat exchange medium flowed in the heat exchanger is refrigerant. In a case using refrigerant, particularly a leakage should be avoided, but by employing the method according to the present invention, it becomes possible to form a connector portion having a desirable flow path structure with respect to leakage and pressure loss even for a high-pressure refrigerant.

Further, since a connector portion with a desirable formation can be formed at a low cost and a high productivity with a great design freedom by the method according to the present invention, the present invention is suitable particularly for, for example, a case of a heat exchanger used in an air conditioning system for vehicles.

Thus, in the method for forming a connector portion for a heat exchanger according to the present invention, because two processes for cutting from two directions (including removing and re-chucking) required in the conventional machining are reduced to one process, advantages for reducing the cost and improving the productivity can be obtained.

Further, because a communication pipe press fitted to the connector side can be omitted, the design freedom of the connector portion can be increased, improvement of the productivity and reduction of the cost of the connector portion can be expected, and even in a case where the heat exchanger is mounted in a narrow space, an optimum design for the connector portion can be easily employed.

Furthermore, because it is possible to form all portions of the flow path in the connector as desirable shapes only by one cutting process and particularly it is possible to form the cross-sectional shape of the header side opening portion of the flow path in the connector as a schematically oval shape, which has been a complete circular shape in the conventional technology, in order to make the cross-sectional area of the flow path larger, it becomes possible to reduce the pressure loss of the flow path of the connector portion.

Further objects, features, and advantages of the present invention will be understood from the following detailed description of a preferred embodiment of the present invention with reference to the accompanying figures.

An embodiment of the invention now is described with reference to the accompanying figures, which is given by way of example only, and is not intended to limit the present invention.

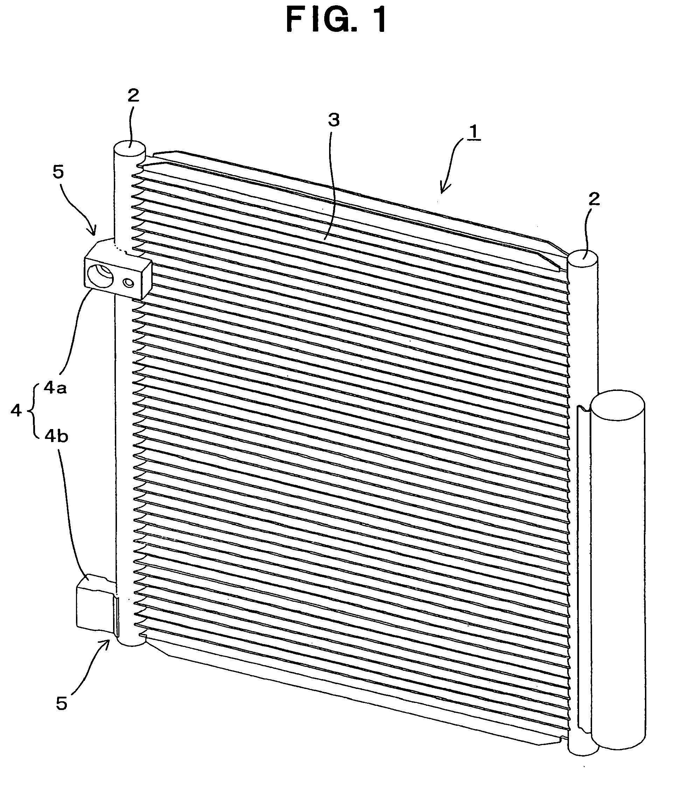

Fig. 1 is a perspective view of a heat exchanger, showing an example of an object for a method according to an embodiment of the present invention.

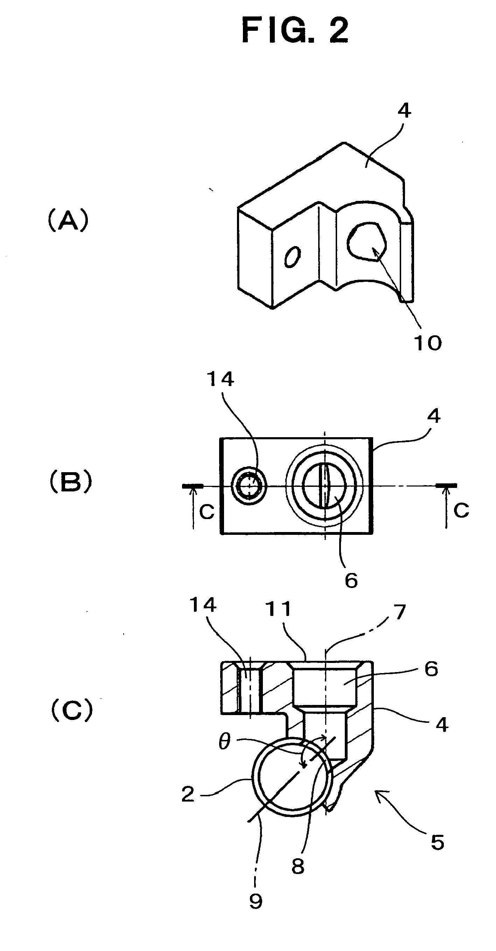

Fig. 2 shows a connector portion of the heat exchanger depicted in Fig. 1, (A) is a perspective view of a connector, (B) is a plan view of the connector, and (C) is a cross-sectional view of a connector portion as viewed along line C-C of (B).

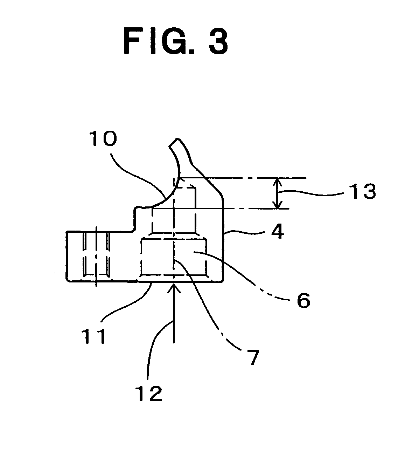

Fig. 3 is a side view of the connector depicted in Fig. 2, showing a method for machining the connector.

Fig. 4 shows a connector portion of a conventional heat exchanger, (A) is a perspective view of a connector, (B) is a plan view of the connector, and (C) is a cross-sectional view of a connector portion as viewed along line C-C of (B).

Fig. 5 is a side view of the connector depicted in Fig. 4, showing a method for machining the connector.

Fig. 6 is a cross-sectional view of a connector portion in a conventional case using a communication pipe, (A) shows a condition before connection and (B) shows a condition after connection.

### [Explanation of symbols]

1: heat exchanger
2: header
3: tube
4, 4a, 4b: connector
5: connector portion
6: flow path in connector
7: center axis of flow path in connector
8: opening of header
9: center axis of opening of header
10: opening at header side of flow path of connector
11: opening at external tube connection side of flow path of connector
12: feeding direction of cutting tool
13: region in which tip of cutting tool forms opening at header side of flow path of connector
14: hole for bolt for fastening tube

Hereinafter, a desirable embodiment of the present invention will be explained referring to the drawings.

Fig. 1 depicts an example of a heat exchanger which is an object for a method for forming a connector portion of a heat exchanger according to an embodiment of the present invention, for example, an example of a heat exchanger used for an air conditioning system for vehicles, which uses refrigerant as heat exchange medium. Heat exchanger 1 is formed as a parallel-flow type heat exchanger which comprises a pair of headers 2 and a plurality of tubes 3 communicating between the pair of headers 2. In this embodiment, connectors 4 (4a, 4b) for forming inlet for introducing heat exchange medium (refrigerant) into heat exchanger 1 and outlet for discharging the heat exchange medium from heat exchanger 1 and for forming connection and communication portions with external circuits are connected to one of headers 2. The portions connected with these connectors 4a, 4b form connector portions 5 in the present invention.

In this connector portion 5, as shown in Fig. 2(C), connector 4 is connected to header 2 so that a center axis 7 of a flow path 6 formed in connector 4 and a center axis 9 of an opening 8 of header 2 are crossed to each other at a certain angle θ. This flow path 6 of connector 4 is formed by machining which performs only cutting in one direction using a cutting tool (for example, a drill). In particular, in this embodiment, flow path 6 of connector 4 is formed by machining of cutting from one direction and by only one time of cutting. An opening 10 at the header side of flow path 6 of connector 4 (shown in Fig. 2(A) and Fig. 3) formed by such a machining of cutting is connected to opening 8 of header 2. By this connection, the flow path communicating with the interior of header, through an opening 11 at the external tube connection side of flow path 6 of connector 4 (shown in Fig. 2(C) and Fig. 3), flow path 6 formed in connector 4, opening 10 at the header side of flow path 6 of connector 4, and opening 8 of header 2, is formed. Where, symbol 14 shows a hole for bolt for fastening a tube when connected to the external tube.

This flow path 6 of connector 4 is machined only by cutting using a cutting tool in one direction (a direction shown by an arrow 12 in Fig. 3), and by this machining the entire flow path 6 is formed up to header side opening 10. Therefore, in this machining of flow path 6 of connector 4, it is not necessary to perform cutting from two directions of from the external tube connection side and from the header side, the number of processes and the cost for machining can be reduced, and the productivity of connector 4 can be improved.

In the above-described machining of flow path 6 of connector 4, the feeding of the cutting tool for cutting flow path 6 in the direction shown by arrow 12 in Fig. 3 is stopped at a position in the feeding direction of the cutting tool, within a range of a region 13 (shown in Fig. 3) in which a tip of the cutting tool forms opening 10 at the header side of flow path 6 of connector 4, and the portion shaped along the shape of the tip is left in connector 4 being machined by cutting. By this machining, the whole of flow path 6 having a desirable shape is machined only by machining of cutting in one direction (preferably, in one direction and by only one time of cutting), and the flow path portion extending in the direction along center axis 7 of flow path 6 and the portion of header side opening 10 whose center axis is crossed with center axis 7 of flow path 6 at a certain angle, are both machined, and by utilizing the shape of the tip of the cutting tool, the shape of the flow path in connector 4 at this header side opening portion is formed at a predetermined shape.

In this case, it is preferred that the center axis of header side opening 10 coincides with center axis 9 of opening 8 of header 2 shown in Fig. 2(C). Further, it is preferred that the position of header side opening 10 of flow path 6 of connector 4 (preferably, including the size) coincides with the position of opening 8 of header 2 (preferably, including the size).

As shown in Fig. 2(A), header side opening 10 of flow path 6 of connector 4 is preferably formed as a schematically oval shape. In opening 10 having such a shape, as compared with the conventional complete circular shape, it becomes possible to enlarge the cross-sectional area of the portion of opening 10, ultimately, it becomes possible to form the connection portion between header side opening 10 of flow path 6 of connector 4 and opening 8 of header 2 larger in cross-sectional area of flow path, and therefore, the pressure loss at this portion can be reduced.

As aforementioned, with the specification of header side opening 10 of flow path 6 of connector 4, opening 8 of header 2 and the connection portion thereof, by setting one of opening 8 of header 2 and the feeding amount of the cutting tool as a reference, the other can be decided, and these can be decided in connection with each other. For example, the feeding amount of the cutting tool may be decided depending upon opening 8 of header 2 so that the cross-sectional area of a flow path at the position communicating between opening 8 of header 2 and header side opening 10 of flow path 6 of connector 4 becomes maximum. Alternatively, the size of opening 8 of header 2 and the position of opening 8 of header 2 in the circumferential direction of header 2 may be decided depending upon the feeding amount of the cutting tool so that the cross-sectional area of a flow path at a position communicating between opening 8 of header 2 and header side opening 10 of flow path 6 of connector 4 becomes maximum. Thus, an optimum flow path for inlet and outlet for heat exchange medium is formed at a condition where the enlargement of the cross-sectional area of the flow path at the connection portion of both openings can be achieved and a low-pressure loss can be achieved.

Furthermore, because header side opening 10 of flow path 6 of connector 4 and opening 8 of header 2 can be directly connected to each other, it is possible to connect connector 4 to header 2 without employing a communication pipe in the conventional structure. By omitting the communication pipe, the number of parts can be decreased and the assembling can be simplified, and in particular, the design freedom can be increased. As a result, it is possible to further improve the productivity of the connector and reduce the cost.

The method for forming a connector portion of a heat exchanger according to the present invention can be applied to any heat exchanger having a connector portion, and especially, it is suitable for a heat exchanger using refrigerant, particularly, for a heat exchanger used in an air conditioning system for vehicles which requires a great design freedom.

## Claims

1. A method for forming a connector portion for a heat exchanger by connecting a connector, which communicates between an interior of a header of said heat exchanger and an external circuit, to said header, so that a center axis of an opening of said header and a center axis of a flow path formed in said connector are crossed to each other at an angle, **characterized in that** said flow path of said connector is formed only by machining which performs cutting in one direction using a cutting tool, and an opening at a header side of said flow path of said connector formed by said cutting is connected to said opening of said header.

2. The method for forming a connector portion for a heat exchanger according to claim 1, wherein said machining of said flow path of said connector using said cutting tool is performed from one direction and by only one time of cutting.

3. The method for forming a connector portion for a heat exchanger according to claim 1 or 2, wherein feeding of said cutting tool for cutting said flow path of said connector is stopped at a position in a feeding direction of said cutting tool, said position being within a range of a region in which a tip of said cutting tool forms said opening at said header side of said flow path of said connector, and a portion shaped along a shape of said tip is left in said connector being machined by cutting.

4. The method for forming a connector portion for a heat exchanger according to any preceding claim, wherein a feeding amount of said cutting tool, and a size or a position, or both, of said opening of said header, are decided in connection with each other.

5. The method for forming a connector portion for a heat exchanger according to claim 4, wherein said feeding amount of said cutting tool is decided depending upon said opening of said header so that a cross-sectional area of a flow path at a position communicating between said opening of said header and said opening at said header side of said flow path of said connector becomes maximum.

6. The method for forming a connector portion for a heat exchanger according to claim 4, wherein said size of said opening of said header and a position of said opening of said header in a circumferential direction of said header are decided depending upon said feeding amount of said cutting tool so that a cross-sectional area of a flow path at a position communicating between said opening of said header and said opening at said header side of said flow path of said connector becomes maximum.

7. The method for forming a connector portion for a heat exchanger according to any preceding claim, wherein a position of said opening at said header side of said flow path of said connector and a position of said opening of said header are set to coincide with each other.

8. The method for forming a connector portion for a heat exchanger according to any preceding claim, wherein said opening at said header side of said flow path of said connector is formed as a schematically oval shape.

9. The method for forming a connector portion for a heat exchanger according to any preceding claim, wherein said flow path of said connector is communicated with said interior of said header without interposing another member.

10. The method for forming a connector portion for a heat exchanger according to any preceding claim, wherein said connector is brazed to said header after said connector is connected to said header.

11. The method for forming a connector portion for a heat exchanger according to any preceding claim, wherein heat exchange medium flowed in said heat exchanger is refrigerant.

12. The method for forming a connector portion for a heat exchanger according to any preceding claim, wherein said heat exchanger is a heat exchanger used for an air conditioning system for vehicles.
